# NEW EUROPEAN PATENT SPECIFICATION

(11) **EP 3 558 674 B3**
(45) Date of publication of this specification: **31.08.2022**
(45) Mention of the grant of the patent: 27.01.2021
(21) Application number: 17816791.2
(22) Date of filing: 14.12.2017
(51) Int. Cl.: B32B 27/08, B32B 27/20, B32B 27/30, B29C 48/00, B29C 48/21

(54) **A THERMOFORMABLE EXTRUDED SHEET WITH GRANITE EFFECT**
THERMOFORMBARE EXTRUDIERTE FOLIE GRANITWIRKUNG
FEUILLE EXTRUDÉE THERMOFORMABLE À EFFET GRANIT

(30) Priority: 21.12.2016 EP 16205979
(43) Date of publication of application: 30.10.2019
(73) Proprietor: Athlone Extrusions Limited, County Westmeath (IE)
(72) Inventor: HALLINAN, Mark, Clara County Offaly R35 XT62 (IE)
(74) Representative: Weldon O'Brien Ltd.
(86) International application number: PCT/EP2017/082806
(87) International publication number: WO 2018/114589

(56) References cited:
- CN-U- 201 950 888
- KR-B1- 101 414 058

## Description

### Introduction

This invention relates to thermoformable extruded sheets.

Thermoformable extruded sheets comprising a support layer of acrylonitrile-butadiene-styrene (ABS) and a top layer of poly(methyl methacrylate) (PMMA) are known. Such thermoformable extruded sheets are generally formed using a co-extrusion technique such as described, for example, in GB2333990A.

Known sheets of this type may be thermoformed into desired shapes to provide articles of sanitary ware, for example, shower trays or bath panels.

KR101414058B and KR101420288B describe a sheet comprising a substrate layer, a mid layer, and a top layer. A small amount of particulates from a masterbatch pellet are introduced into the mid layer. In KR101414058 the particulates are said to have a size range of from 50µm to 200µm. In KR101420288 the size of the particulates are reduced to a range offrom 50µm to 100µm in order to overcome processing difficulties if the particle size exceeds 100µm.

CN201950888U describes a thermoformable sheet comprising a substrate layer of ABS and one layer of PMMA on each side of the substrate layer.

There is however a need to provide a co-extruded sheet which can be used in a wide range of different applications and which can be readily thermoformed into a desired shape.

### Statements of Invention

According to the invention there is provided a thermoformable co-extruded sheet as defined in claim 1.

In one embodiment the mid layer comprises flakes of mica in an amount of from 3% to 5% by weight of material in the mid layer. The mid layer may comprise flakes of mica in an amount of about 4% by weight of the material of the mid layer.

In one embodiment the mica flakes comprise a blend of different mica flakes with different properties such as colour and/or lustre.

The mica flakes may be selected from one or more groups of flakes including those having black, bronze, silver or gold colour.

In one case the mica flakes comprise flakes of muscovite mica.

The mica flakes have a size in the range of from 250µm to 2360µm.

In one embodiment the mid layer comprises flakes of mica in an amount of from 3% to 5% by weight of material in the mid layer.

In one case the mid layer comprises flakes of mica in an amount of about 4% by weight of the material of the mid layer.

The mica flakes may comprise a blend of different mica flakes with different properties such as colour and/or lustre.

The mica flakes may be selected from one or more groups of flakes including those having black, bronze, silver or gold colour.

In one embodiment the mica flakes comprise flakes of muscovite mica.

In one embodiment the top layer provides a matt finish. The matt finish is 10 to 20 Gloss Units measured using a gloss meter (such as Sheen 101) at an angle of reflectance of 60 degrees.

The top layer may comprise 100% PMMA Altuglas^{®} HFI-10.

In one embodiment the combined thickness of the mid layer and the top layer is at least 0.5mm.

The thickness of the mid layer may be from 60 to 70% of the combined thickness of the mid layer and the top layer.

The thickness of the top layer may be from 30 to 40% of the combined thickness of the mid layer and the top layer.

The thickness of the substrate layer may be from 1mm to 10mm.

The thermoformable sheet may have a density in the range of from 1.1 - 1.2 g/cm3.

In one embodiment the mid layer consists of flakes of mica dispersed in poly(methyl methacrylate).

In one embodiment the thermoformable sheet consists of the substrate layer, the mid layer and the top layer.

In one case the flakes of mica are introduced through a side stream.

The flakes of mica may be introduced into the mid layer material using a proportional feeder.

The invention also provides an article such as sanitary ware thermoformed from a sheet of the invention.

In one embodiment the invention provides a shower tray or sink thermoformed from a sheet of the invention to give the appearance of granite or stone effect.

The sheet of the invention may also be attached to a backing support to form either a counter top or a panel such as a wall panel. The sheet may be laminated to the backing support. The backing support may, for example, be of medium density fibreboard (MDF) or the like.

### Brief Description of the Drawings

The invention will be more clearly understood from the following description given by way of example only with reference to the accompanying drawings, in which:-
Fig. 1 is a cross sectional view of a thermoformable sheet according to the invention;
Fig. 2 is a diagram of a co-extrusion manufacturing system for forming the sheet;
Fig. 3 is another diagram illustrating the method for manufacturing the sheet;
Fig. 4 is a diagram of one extruder illustrating the introduction of mica flakes directly into the extruder;
Fig. 5 illustrates the feeding of mica flakes into a hopper using a side feeder system.

### Detailed Description

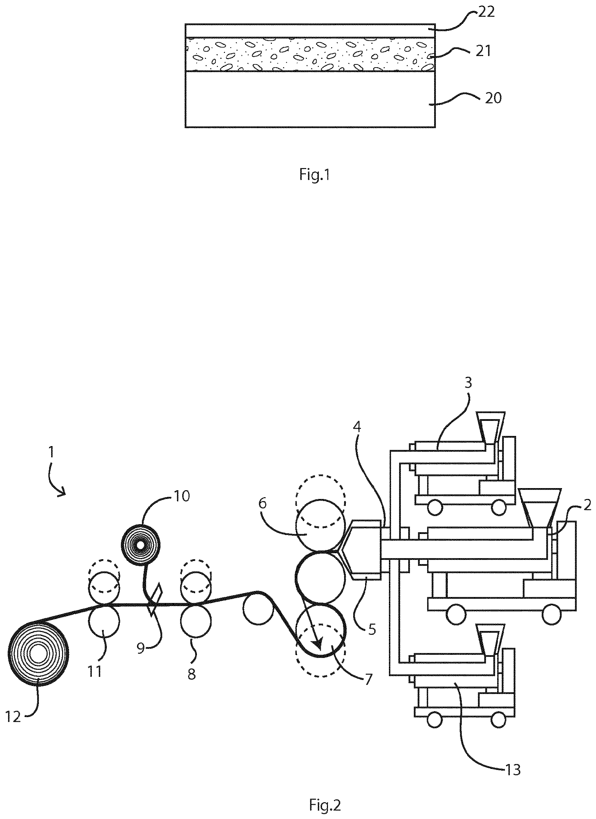

Fig. 1 is a cross sectional view of a thermoformable sheet according to the invention. The thermoformable sheet comprises a substrate layer 20 of acrylonitrile-butadiene-styrene (ABS) material, a mid layer 21 of polymethyl methacrylate (PMMA), and a top layer 22 of a transparent PMMA material. The mid layer 21 comprises flakes of mica in an amount of from 2% to 6%, 3% to 5%, about 4% by weight of material in the mid layer. The mica flakes have a size in the range of from 250µm to 2500µm, in some cases in the range of 250µm to 2360µm. The incorporation of these flakes gives the sheet an effect that is very similar to solid granite or stone.

The thermoformable sheet can be moulded into many intricate shapes that would be impossible with solid granite or stone. It is also has the advantage of being much lighter, lower density and far more cost effective that solid surface material.

In addition to the striking visual appearance, the sheet, when thermoformed into a finished product such as a shower tray or bath, also provides a high friction or anti-slip top surface. This is produced when the heated sheet is stretched into shape and the mica flakes slightly protrude into the top layer of PMMA. This is particularly advantageous in sanitary products such as a shower tray or bath.

The matt level of the top surface layer of PMMA is also important in obtaining the appearance and feel of stone or granite.

The top PMMA layer in the thermoformable sheet of the invention has a very high matt finish of typically 10 to 20 Gloss Units (measured using Sheen 101 gloss meter at an angle of reflectance of 60 degrees).

Because of the low percentage of mica flakes in the total sheet the density and weight of the sheet is much lower than a sheet containing high density additives. The density of the thermoformable sheet of the invention is typically in the range of 1.1 - 1.2 g/cm³ which is the same as a standard white ABS/PMMA sheet product.

Fig. 2 is a diagram of a typical co-extrusion system 1 which may be used to produce the co-extruded sheets of the invention. Raw material PMMA and ABS in particulate or pellet form is first extruded using extruders 2, 3, 13 and the extrudates are delivered into a feed block manifold 4 for a die 5 that controls the thickness of the sheet. Polishing rollers 6 are applied to the co-extruded material which is then passed over a chilling roller 7. Nip rollers 8 guide the sheet downstream and edge trim material is cut with a cutting knife 9 and wound onto a trim roller 10 or fed into a grinder. The sheet then passes through a gap defined by nip rollers 11 and wound onto a reel 12 or cut into a flat sheet.

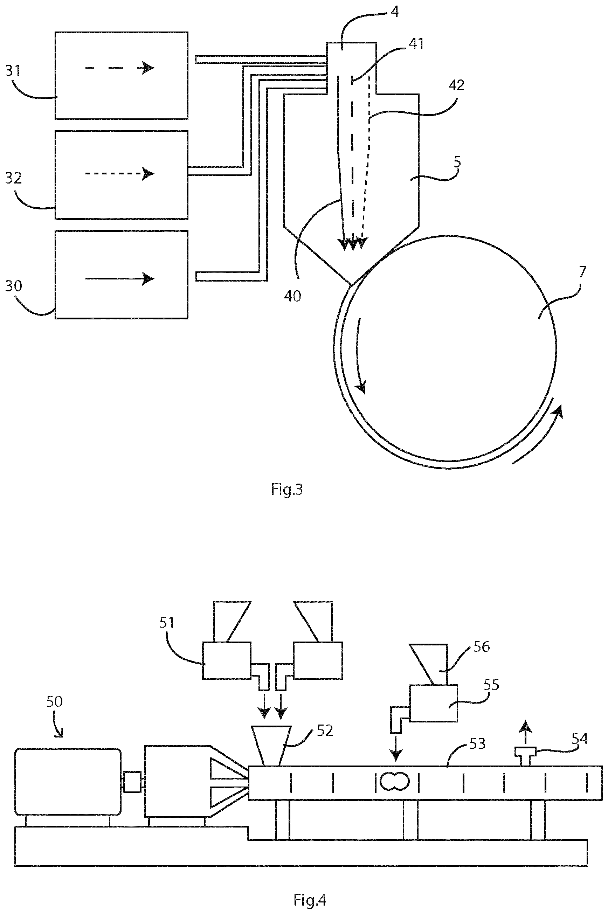

Fig. 3 illustrates how a three layer sheet is produced. Three separate extruders 31, 32, 33 feed molten plastic into a sheet die-head 4 and the three layer sheet is produced by co-extrusion through a die 5.

The first extruder 30 is used to form molten material 40 for the top layer 22. The second extruder 32 is used to form molten material 42 for the substrate layer 20. The third extruder 31 is used to form molten material 41 for the mid or core layer 21. The co-extrusion of the three streams 40, 41, 42 of molten material into a sheet with three layers is illustrated diagrammatically.

The three layer profile in this case consists of a substrate layer 20 of ABS (such as Magnum 3404), PMMA (such as Altuglas MI-7T) in the middle layer 21 and PMMA (such as Altuglas HFI-10) in the top layer 22.

In the invention, individual flakes of mica are introduced into the mid layer material prior to or during extrusion of the mid layer. Importantly, the mica flakes are added without preprocessing. This is of major significance in ensuring that the integrity of the mica flakes is maintained which is important in producing a thermoformable sheet which has a granite-like effect.

The direct addition of the mica flakes into the material used to form the mid layer 21 is illustrated in Fig. 4. In this case, the material used to form the mid layer is extruded by an extruder 53 driven by a motor 50. The extruder 53 has a feed hopper 52 into which raw PMMA material is introduce from a supply hopper 51. The extruder also has a vent 54. Mica flakes are introduced directly into the extruder 53 through a side stream from a hopper 56 through a proportional feeder 55. This arrangement has the advantage of minimising the exposure of the mica flakes to unnecessary processing that would reduce the size of the flakes.

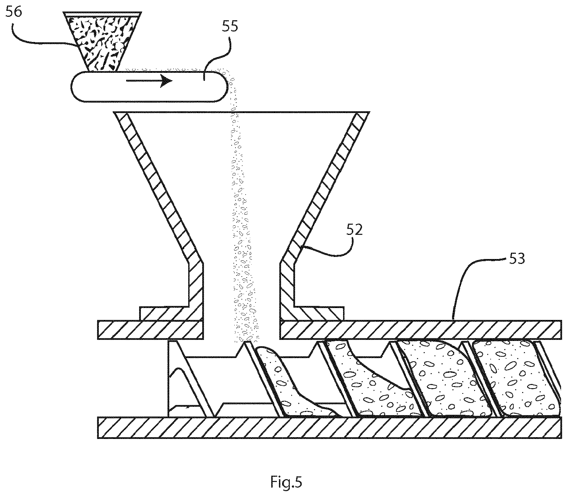

An alternative system for introducing the mica flakes is illustrated in Fig. 5. In this case mica flakes are delivered from a hopper 56 along a side stream 55 into the feed hopper 52 of the extruder 53. This is a convenient method of addition.

Figs. 4 and 5 illustrate how the mica flakes are fed into the hopper via a side feeder system.

This method is important for dispersing the large 250 - 2500 micron mica flakes into the PMMA mid layer. This assists in providing the unique stone/granite appearance of the finished sheet.

The method of the invention introduces individual mica flakes into the mid layer. The method of the invention is very different than using masterbatch to introduce additives. Masterbatch is a conventional means of introducing a concentrated mixture of pigments and/or additives encapsulated during compounding/extrusion into a carrier resin which is then cooled and cut into a granular shape. Masterbatch allows the processor to colour raw polymer economically during the plastics manufacturing process. During the compounding process of producing granular masterbatch, a twinscrew extruder kneads and disperses the pigments or additives into the polymer melt. This breaks down any large particles for better dispersion.

Particles of a smaller size (less than 200 microns) result in a completely different visual effect in the end product.

In the invention, thermoformable sheet is formed by co-extruding a substrate layer of ABS material with a top layer of transparent PMMA material and a mid-layer of PMMA material.

These materials are delivered along separate streams to a co-extrusion die which forms the material into a three-layer co-extruded sheet which is subsequently cooled.

The ABS base layer may, for example, be Magnum 3404 resin which is available from Styron.

The PMMA mid layer may, for example, be granules of Altuglas MI-7T from Altuglas International or Arkema Inc.

The PMMA top layer may, for example, be Altuglas HFI-10 from Altuglas International or Arkema Inc.

### Incorporation of colour masterbatch & mica flakes to obtain a granite effect.

An industry standard colour masterbatch consisting of commercially available pigments (Titanium Dioxide, Iron Oxide Black, Iron Oxide Red, Iron oxide Yellow) are compounded on an polymer carrier and added to the base layer at an addition rate of 5-10%, this gives the sheet its opacity and base colour.

A typical masterbatch recipe for Grey 30999 may be:

| **Material** | **Amount / Kg** |
|---|---|
| ABS powder (Dow - Magnum 3404) | 650g |
| Titanium Dioxide (Huntsman) | 225g |
| Carbon Black (Cabott) | 75g |
| Luwax EVA-3 Wax (BASF) | 50g |

This recipe is mixed in a high speed mixer and then fed through a twin screw extruder that melts and compounds the ingredients. The material then exits a strand die and is cooled in a water-bath before being pelletized into granules of colour masterbatch.

The Mica flakes (Decorflake Black, Gold, Silver & Bronze along with the Muscovite Mica) are added via a side feeder during the sheet extrusion process as described above.

This ensures that the Mica flakes are only present in the mid layer, (clear PMMA layer) and the base colour is visible from the base layer (ABS layer).

The top PMMA layer then covers the Mica Flakes and gives the sheet a smooth transparent finish.

The materials and unique method of production gives the sheet an effect that is very similar to solid surface or solid granite/stone.

This is achieved by the incorporation of large flakes of mica (250 - 2500 microns) which have the appearance of natural granite. If the flakes are too small (50 - 200 microns) then the appearance is substantially inferior.

The thermoformable sheet can be moulded into many intricate shapes that would be impossible with solid granite or stone. It is also has the advantage of being much lighter, lower density and far more cost effective that solid surface material.

In addition to the striking visual appearance, the invention, when thermoformed into the finished product (shower tray or bath) also has a high friction or anti-slip effect. This is produced when the heated sheet is stretched into shape and the mica flakes slightly protrude into the top layer of PMMA. This effect is very advantageous in the sanitary industry.

The matt level of the top surface layer of PMMA is also important in obtaining the desired appearance and feel.

The top PMMA layer in the thermoformable sheet of the invention has a very high matt finish (10 - 20 Gloss Units) unlike the high gloss finish (60 - 80 Gloss Units) of KR101414058B and KR101420288B

Because of the low percentage of Mica flakes in the total sheet the density and weight of the sheet is much lower than a sheet containing high density additives. The density of the thermoformable sheet of the invention is typically in the range of 1.1 - 1.2 g/cm³ which is the same as a standard white ABS/PMMA sheet product.

In the invention, flakes of mica are introduced into the stream of mid layer PMMA material using a side feeder. We have found that the amount of mica flakes introduced into the mid layer stream to achieve good distribution and excellent visual effects whilst still providing a sheet that can be readily thermoformed into a desired shape such as a shower tray is in the range of from 2% to 6% by weight, preferably from 3% to 5%, and ideally about 4% of the mid layer PMMA material.

The mica flakes can be of any suitable size and colour, depending on the effect required. We have found that a blend of different mica flakes produces the desired effect without comprising processability. For example, a blend of difference mica flakes such as black, bronze, gold and silver can be used. Such mica flakes are available, for example, from LKAB Minerals under the Trade mark DekorFlake. Muscovite mica flakes may be used as an alternative or in addition to any of all of the different coloured mica flakes. Muscovite mica flakes are available, for example, from LKAB Minerals.

The mica flakes may be selected from one or more of the following which are available from LKAB minerals.

### DekorFlake Black 325

| **Particle size distribution by dry sieving** | | |
|---|---|---|
| **BS Mesh No.** | **Sieve Aperture (Microns)** | **Cumulative % Finer** |
| 22 | 710 | 98 - 100 |
| 36 | 425 | 50-70 |
| 100 | 150 | 0-15 |
| Loose bulk density 0.30 - 0.70 kg/litre | | |

### DekorFlake Bronze 650

| **Particle size distribution by dry sieving** | | |
|---|---|---|
| **BS Mesh No.** | **Sieve Aperture (Microns)** | **Cumulative% Finer** |
| 16 | 1000 | 90 - 100 |
| 30 | 500 | 20 - 50 |
| 60 | 250 | 0-20 |
| Loose bulk density | | 0.30 - 0.70 kg/litre |

### DekorFlake Gold 175

| **Particle size distribution by dry sieving** | | |
|---|---|---|
| **BS Mesh No.** | **Sieve Aperture (Microns)** | **Cumulative % Finer** |
| 60 | 250 | 99 - 100 |
| 100 | 150 | 30 - 55 |
| 150 | 106 | 0 - 10 |
| Loose bulk density | | 0.20 - 0.50 kg/litre |

### DekorFlake Silver 650

| **Particle size distribution by dry sieving** | | |
|---|---|---|
| **BS Mesh No.** | **Sieve Aperture (Microns)** | **Cumulative % Finer** |
| 14 | 1180 | 100 |
| 30 | 500 | 15-35 |
| 60 | 250 | 0-5 |
| Moisture loss at 105°C | | 0.2% max |
| Loose bulk density | | 0.50 - 0.80 kg/litre |

### DekorFlake Gold 1500

| **Particle size distribution by dry sieving** | | |
|---|---|---|
| **BS Mesh No.** | **Sieve Aperture (Microns)** | **Cumulative % Finer** |
| 7 | 2360 | 99 - 100 |
| 14 | 1180 | 30 - 50 |
| 30 | 500 | 0-5 |
| Loose bulk density | | 0.20 - 0.50 kg/litre |

### DekorFlake Silver 1500

| **Particle size distribution by dry sieving** | | |
|---|---|---|
| **BS Mesh No.** | **Sieve Aperture (Microns)** | **Cumulative % Finer** |
| 7 | 2360 | 99 - 100 |
| 14 | 1180 | 45-75 |
| 30 | 500 | 0-5 |
| Moisture loss at 105°C | | 0.2% max |
| Loose bulk density | | 0.50 - 0.80 kg/litre |

### Muscovite Mica MD1700

| **Particle size distribution by dry sieving** | | |
|---|---|---|
| **BS Mesh No.** | **Sieve Aperture (Microns)** | **Cumulative % Finer** |
| 10 | 1700 | 99.5 - 100 |
| 16 | 1000 | 75 - 93 |
| 30 | 500 | 15 - 40 |
| 60 | 250 | 0-12 |
| Loose bulk density | | 0.18 - 0.32 kg/litre |

### Examples

### Product: Beige ST 0001

Top layer is 100% PMMA (MI-7T)
Mid layer is PMMA (MI-7T) with the addition of Decorflake Black (2% by weight), Decorflake Bronze (1% by weight) & Muscovite Mica (1% by weight)
Base layer is ABS (Magnum 3404) + Sand AC 1781 colour masterbatch (10% by weight)

### Product: Beige ST 0002 XM

Top layer is 100% PMMA (HFI-10)
Mid layer is PMMA (MI-7T) with the addition of Decorflake Black (2% by weight), Decorflake Bronze (1% by weight) & Muscovite Mica (1% by weight)
Base layer is ABS (Magnum 3404) + Sand AC 1781 colour masterbatch (10% by weight)

### Product: Granite ST 0004 XM

Top layer is 100% PMMA (HFI-10)
Mid layer is PMMA(MI-7T) with the addition of Decorflake Black (1% by weight), Decorflake Bronze (0.5% by weight), Muscovite Mica (0.5% by weight) & Sand AC 1781 colour masterbatch (0.5% by weight)
Base layer is ABS (Magnum 3404) + Sand AC 1781 colour masterbatch (10% by weight)

### Product: DK Grey ST 0007 XM

Top layer is 100% PMMA (HFI-10)
Mid layer is PMMA (MI-7T) with the addition of Decorflake Black (1% by weight), Muscovite Mica (1% by weight), Silvet 764-30-EI (0.2% by weight) & Grey 30999 colour masterbatch (0.5% by weight)
Base layer is ABS (Magnum 3404) + Grey 30999 colour masterbatch (5% by weight)

### Product: White Quartz ST 0011 XM

Top layer is 100% PMMA (HFI-10)
Mid layer is PMMA (MI-7T) with the addition of Muscovite Mica (2% by weight)
Base layer is ABS (Magnum 3404) + White 03397 colour masterbatch (6% by weight)

### Product: Black Quartz ST 0010 XM

Top layer is 100% PMMA (HFI-10)
Mid layer is PMMA (MI-7T) with the addition of Muscovite Mica (1% by weight) & Decorflake Black (1% by weight),
Base layer is ABS (Magnum 3404) + Black 64399 colour masterbatch (10% by weight)

The pre-formed sheet may be used to form an article of desired shape using thermoforming. In this process the sheet is clamped at the edge of a mould which has a cavity corresponding to the shape of the desired article such as a shower tray. The force used in moulding may be generated by compressed gas (such as air), drawing a vacuum and/or mechanical forces applied using forming elements such as metal plates. During this moulding process the sheet is typically heated to a temperature in the range of from 140°C to 190°C, typically 160°C to 180°C.

The invention is not limited to the embodiment hereinbefore described, with reference to the accompanying drawings, which may be varied in construction and detail.

### Description

The invention also provides a method for manufacturing a thermoformable sheet as set out in claim 11.

## Claims

1. A thermoformable co-extruded sheet comprising:
a substrate layer (20) of acrylonitrile-butadiene-styrene (ABS) material,
a mid layer (21) of poly(methyl methacrylate) (PMMA) material, and
a top layer (22) of transparent poly(methyl methacrylate) (PMMA) material,
the mid layer (21) comprising flakes of mica in an amount of from 2% to 6% by weight of the material in the mid layer (21), and the mica flakes have a size in the range of from 250µm to 2500µm.

2. A thermoformable sheet as claimed in claim 1 wherein the mica flakes have a size in the range of from 250µm to 2360µm.

3. A thermoformable sheet as claimed in claim 1 or 2 wherein the mid layer (21) comprises flakes of mica in an amount of from 3% to 5% by weight of material in the mid layer, optionally the mid layer comprises flakes of mica in an amount of about 4% by weight of the material of the mid layer.

4. A thermoformable sheet as claimed in any of claims 1 to 3 wherein the mica flakes comprise a blend of different mica flakes with different properties such as colour and/or lustre, optionally the mica flakes are selected from one or more groups of flakes including those having black, bronze, silver or gold colour.

5. A thermoformable sheet as claimed in any of claims 1 to 4 wherein the mica flakes comprise flakes of muscovite mica.

6. A thermoformable sheet as claimed in any of claims 1 to 5 wherein the top layer (22) provides a matt finish.

7. A thermoformable sheet as claimed in any of claims 1 to 6 wherein the combined thickness of the mid layer (21) and the top layer (22) is at least 0.5mm, optionally the thickness of the mid layer (21) is from 60 to 70% of the combined thickness of the mid layer (21) and the top layer (22), optionally the thickness of the top layer (22) is from 30 to 40% of the combined thickness of the mid layer (21) and the top layer (22), optionally the thickness of the substrate layer (20) is from 1mm to 10mm.

8. A thermoformable sheet as claimed in any of claims 1 to 7 wherein the sheet has a density in the range of from 1.1 - 1.2 g/cm³.

9. A thermoformable sheet as claimed in any of claims 1 to 8 wherein the mid layer (21) consists of flakes of mica dispersed in poly(methyl methacrylate).

10. A thermoformable sheet as claimed in any of claims 1 to 9 consisting of the substrate layer (20), the mid layer (21) and the top layer (22).

11. A method for manufacturing a thermoformable sheet comprising:-
extruding a substrate material comprising acrylonitrile-butadiene-styrene (ABS) material;
extruding a mid layer material comprising poly(methyl methacrylate) (PMMA);
extruding a top layer material comprising poly(methyl methacrylate) (PMMA); and
passing the co-extruded materials through a die to form a thermoformable sheet comprising the substrate material, the mid layer material, and the top layer material, wherein individual flakes of mica are introduced into the mid layer material prior to or during extrusion of the mid layer material, in an amount of 2 to 6% by weight of the material in the mid layer and the mica flakes have a size in the range of from 250µm to 2500µm.

12. A method as claimed in claim 11 wherein the flakes of mica are introduced through a side stream, optionally the flakes of mica are introduced into the mid layer material using a proportional feeder (55).

13. An article such as sanitary ware thermoformed from a sheet as claimed in any of claims 1 to 10.

14. A shower tray or sink, or a bath or a bath panel thermoformed from a sheet as claimed in any of claims 1 to 10.

15. A counter top or a wall panel comprising a backing support and sheet as claimed in any of claims 1 to 10 attached to the backing support, optionally the sheet is laminated to the backing support.

## Patentansprüche

1. Thermoformbare coextrudierte Platte, die Folgendes umfasst:
eine Substratschicht (20) aus Acrylnitril-Butadien-Styrol (ABS)-Material,
eine mittlere Schicht (21) aus Poly(methylmethacrylat) (PMMA)-Material und
eine obere Schicht (22) aus transparentem Poly(methylmethacrylat) (PMMA)-Material,
wobei die mittlere Schicht (21) Glimmerplättchen in einer Menge von 2 Gewichts-% bis 6 Gewichts-% des Materials in der mittleren Schicht (21) umfasst und die Glimmerplättchen eine Größe in dem Bereich von 250 µm bis 2500 µm aufweisen.

2. Thermoformbare Platte nach Anspruch 1, wobei die Glimmerplättchen eine Größe in dem Bereich von 250 µm bis 2360 µm aufweisen.

3. Thermoformbare Platte nach Anspruch 1 oder 2, wobei die mittlere Schicht (21) Glimmerplättchen in einer Menge von 3 Gewichts-% bis 5 Gewichts-% des Materials in der mittleren Schicht umfasst, optional wobei die mittlere Schicht Glimmerplättchen in einer Menge von etwa 4 Gewichts-% des Materials der mittleren Schicht umfasst.

4. Thermoformbare Platte nach einem der Ansprüche 1 bis 3, wobei die Glimmerplättchen ein Gemisch aus verschiedenen Glimmerplättchen mit verschiedenen Eigenschaften, wie zum Beispiel Farbe und/oder Glanz, umfassen, optional wobei die Glimmerplättchen aus einer oder mehrere Gruppen von Plättchen ausgewählt sind, die solche einschließen, die eine schwarze, bronzene, silberne oder goldene Farbe aufweisen.

5. Thermoformbare Platte nach einem der Ansprüche 1 bis 4, wobei die Glimmerplättchen Plättchen von Muscovitglimmer umfassen.

6. Thermoformbare Platte nach einem der Ansprüche 1 bis 5, wobei die obere Schicht (22) eine matte Oberfläche bereitstellt.

7. Thermoformbare Platte nach einem der Ansprüche 1 bis 6, wobei die kombinierte Dicke der mittleren Schicht (21) und der oberen Schicht (22) mindestens 0,5 mm beträgt, optional wobei die Dicke der mittleren Schicht (21) von 60 bis 70 % der kombinierten Dicke der mittleren Schicht (21) und der oberen Schicht (22) beträgt, optional wobei die Dicke der oberen Schicht (22) von 30 bis 40 % der kombinierten Dicke der mittleren Schicht (21) und der oberen Schicht (22) beträgt, optional wobei die Dicke der Substratschicht (20) von 1 mm bis 10 mm beträgt.

8. Thermoformbare Platte nach einem der Ansprüche 1 bis 7, wobei die Platte eine Dichte in dem Bereich von 1,1-1,2 g/cm³ aufweist.

9. Thermoformbare Platte nach einem der Ansprüche 1 bis 8, wobei die mittlere Schicht (21) aus Glimmerplättchen besteht, die im Poly(methylmethacrylat) verteilt sind.

10. Thermoformbare Platte nach einem der Ansprüche 1 bis 9, die aus der Substratschicht (20), der mittleren Schicht (21) und der oberen Schicht (22) besteht.

11. Verfahren für die Herstellung einer thermoformbaren Platte, das Folgendes umfasst:
Extrudieren eines Substratmaterials, das Acrylnitril-Butadien-Styrol (ABS)-Material umfasst;
Extrudieren eines Materials der mittleren Schicht, das Poly(methylmethacrylat) (PMMA) umfasst;
Extrudieren eines Materials der oberen Schicht, das Poly(methylmethacrylat) (PMMA) umfasst; und
Durchleiten der coextrudierten Materialien durch eine Düse, um eine thermoformbare Platte zu bilden, die das Substratmaterial, das Material der mittleren Schicht und das Material der oberen Schicht umfasst,
wobei einzelne Glimmerplättchen in das Material der mittleren Schicht vor oder während der Extrusion des Materials der mittleren Schicht in einer Menge von 2 bis 6 Gewichts-% des Materials in der mittleren Schicht eingeführt werden und die Glimmerplättchen eine Größe in dem Bereich von 250 µm bis 2500 µm aufweisen.

12. Verfahren nach Anspruch 11, wobei die Glimmerplättchen durch einen Seitenstrom eingeführt werden, optional wobei die Glimmerplättchen in das Material der mittleren Schicht unter Verwendung einer proportionalen Zuführungsvorrichtung (55) eingeführt werden.

13. Artikel, wie zum Beispiel Sanitärprodukt, der aus einer Platte nach einem der Ansprüche 1 bis 10 thermogeformt ist.

14. Duschwanne oder Spülbecken oder eine Badewanne oder eine Badewannenverkleidung, die aus einer Platte nach einem der Ansprüche 1 bis 10 thermogeformt sind.

15. Arbeitsplatte oder eine Wandplatte, die eine Stützunterlage und Platte nach einem der Ansprüche 1 bis 10, die an die Stützunterlage angebracht ist, umfassen, optional wobei die Platte auf die Stützunterlage laminiert ist.

## Revendications

1. Feuille coextrudée thermoformable comprenant :
une couche de substrat (20) en matériau acrylonitrile-butadiène-styrène (ABS),
une couche intermédiaire (21) en matériau poly(méthacrylate de méthyle) (PMMA), et
une couche supérieure (22) en matériau poly(méthacrylate de méthyle) (PMMA) transparent,
la couche intermédiaire (21) comprenant des paillettes de mica en une quantité allant de 2 % à 6 % en poids du matériau de la couche intermédiaire (21), et les paillettes de mica ayant une taille comprise dans la plage allant de 250 µm à 2 500 µm.

2. Feuille thermoformable selon la revendication 1, dans laquelle les paillettes de mica ont une taille comprise dans la plage allant de 250 µm à 2 360 µm.

3. Feuille thermoformable selon la revendication 1 ou 2, dans laquelle la couche intermédiaire (21) comprend des paillettes de mica en une quantité allant de 3 % à 5 % en poids de matériau dans la couche intermédiaire, facultativement la couche intermédiaire comprend des paillettes de mica en une quantité d'environ 4 % en poids du matériau de la couche intermédiaire.

4. Feuille thermoformable selon l'une quelconque des revendications 1 à 3, dans laquelle les paillettes de mica comprennent un mélange homogène de différentes paillettes de mica ayant différentes propriétés telles que la couleur et/ou l'éclat, facultativement les paillettes de mica sont choisies parmi un ou plusieurs groupes de paillettes incluant celles ayant une couleur noire, bronze, argent ou or.

5. Feuille thermoformable selon l'une quelconque des revendications 1 à 4, dans laquelle les paillettes de mica comprennent des paillettes de mica muscovite.

6. Feuille thermoformable selon l'une quelconque des revendications 1 à 5, dans laquelle la couche supérieure (22) présente un fini mat.

7. Feuille thermoformable selon l'une quelconque des revendications 1 à 6, dans laquelle l'épaisseur combinée de la couche intermédiaire (21) et de la couche supérieure (22) est d'au moins 0,5 mm, facultativement l'épaisseur de la couche intermédiaire (21) représente de 60 à 70 % de l'épaisseur combinée de la couche intermédiaire (21) et de la couche supérieure (22), facultativement l'épaisseur de la couche supérieure (22) représente de 30 à 40 % de l'épaisseur combinée de la couche intermédiaire (21) et de la couche supérieure (22), facultativement l'épaisseur de la couche de substrat (20) va de 1 mm à 10 mm.

8. Feuille thermoformable selon l'une quelconque des revendications 1 à 7, dans laquelle la feuille a une masse volumique comprise dans la plage allant de 1,1 à 1,2 g/cm³.

9. Feuille thermoformable selon l'une quelconque des revendications 1 à 8, dans laquelle la couche intermédiaire (21) est constituée de paillettes de mica dispersées dans du poly(méthacrylate de méthyle).

10. Feuille thermoformable selon l'une quelconque des revendications 1 à 9, constituée de la couche de substrat (20), de la couche intermédiaire (21) et de la couche supérieure (22).

11. Procédé pour la fabrication d'une feuille thermoformable comprenant :
l'extrusion d'un matériau de substrat comprenant un matériau acrylonitrile-butadiène-styrène (ABS) ;
l'extrusion d'un matériau de couche intermédiaire comprenant du poly(méthacrylate de méthyle) (PMMA) ;
l'extrusion d'un matériau de couche supérieure comprenant du poly(méthacrylate de méthyle) (PMMA) ; et
le passage des matériaux coextrudés à travers une matrice pour former une feuille thermoformable comprenant le matériau de substrat, le matériau de couche intermédiaire et le matériau de couche supérieure,
dans lequel des paillettes individuelles de mica sont introduites dans le matériau de couche intermédiaire avant ou pendant l'extrusion du matériau de couche intermédiaire, en une quantité de 2 à 6 % en poids du matériau dans la couche intermédiaire, et les paillettes de mica ont une taille comprise dans la plage allant de 250 µm à 2 500 µm.

12. Procédé selon la revendication 11, dans lequel les paillettes de mica sont introduites par un courant latéral, facultativement les paillettes de mica sont introduites dans le matériau de couche intermédiaire à l'aide d'un dispositif d'alimentation proportionnel (55).

13. Article tel qu'un appareil sanitaire thermoformé à partir d'une feuille selon l'une quelconque des revendications 1 à 10.

14. Bac de douche ou évier, ou baignoire ou panneau de baignoire thermoformé à partir d'une feuille selon l'une quelconque des revendications 1 à 10.

15. Plan de travail ou panneau mural comprenant un support arrière et une feuille selon l'une quelconque des revendications 1 à 10 fixée au support arrière, la feuille étant facultativement laminée sur le support arrière.
